# EUROPÄISCHE PATENTSCHRIFT

(11) **EP 3 707 047 B1**
(45) Veröffentlichungstag und Bekanntmachung des Hinweises auf die Patenterteilung: **29.03.2023**
(21) Anmeldenummer: 18804535.5
(22) Anmeldetag: 08.11.2018
(51) Int. Cl.: B60W 50/00, B60W 50/023, B60W 50/04, B60W 50/029

(54) **SYSTEM ZUM WENIGSTENS TEILAUTONOMEN BETRIEB EINES KRAFTFAHRZEUGS MIT DOPPELTER REDUNDANZ**
SYSTEM FOR THE AT LEAST SEMI-AUTONOMOUS OPERATION OF A MOTOR VEHICLE WITH DOUBLE REDUNDANCY
SYSTÈME POUR LE FONCTIONNEMENT AU MOINS PARTIELLEMENT AUTONOME D'UN VÉHICULE AUTOMOBILE À DOUBLE REDONDANCE

(30) Priorität: 10.11.2017 DE 102017010716
(43) Veröffentlichungstag der Anmeldung: 16.09.2020
(73) Patentinhaber: KNORR-BREMSE Systeme für Nutzfahrzeuge GmbH, 80809 München (DE)
(72) Erfinder: HECKER, Falk, 71706 Markgröningen (DE); MUSTAPHA, Adnan, 75433 Maulbronn (DE); JUNDT, Oliver, 74394 Hessigheim (DE); GÜCKER, Ulrich, 71701 Schwieberdingen (DE)
(86) Internationale Anmeldenummer: PCT/EP2018/080688
(87) Internationale Veröffentlichungsnummer: WO 2019/092150

(56) Entgegenhaltungen:
- WO-A1-2016/045652
- WO-A1-2016/110464
- DE-A1-102006 048 910
- DE-A1-102014 212 289
- US-B1- 9 195 232

## Beschreibung

Die vorliegende Erfindung betrifft ein System, durch welches ein wenigstens teilautonomer Betrieb eines Kraftfahrzeugs gesteuert wird, beinhaltend wenigstens eine Sensoreinrichtung, mit welcher die Umgebung des Kraftfahrzeugs charakterisierende Umgebungsdaten erzeugbar sind, eine elektronische Hauptsteuereinheit, welche die Umgebungsdaten von der Sensoreinrichtung empfängt und abhängig von den Umgebungsdaten Stellbefehle in wenigstens eine Einrichtung oder in wenigstens einen Aktuator einsteuert, welche oder welcher bei dem wenigstens teilautonomen Betrieb des Kraftfahrzeugs zum Einsatz kommt, eine erste elektronische Ersatzsteuerungseinheit, welche im Falle eines Fehlers oder Ausfalls der elektronischen Hauptsteuereinheit die Umgebungsdaten von der Sensoreinrichtung empfängt und abhängig von den Umgebungsdaten Stellbefehle in die wenigstens eine Einrichtung oder in den wenigstens einen Aktuator einsteuert, welche oder welcher bei dem wenigstens teilautonomen Betrieb des Kraftfahrzeugs zum Einsatz kommt.

Beim "Manuellen Fahren" bedient der Fahrer das Kraftfahrzeug in Bezug auf dessen Längs- und Querführung. Auch wenn durch Fahrerassistenzsysteme, die Längs- und Querführung unterstützt bzw. teilweise auch übernommen werden kann, bleibt der Fahrer für das Kraftfahrzeug verantwortlich und ihm obliegt die Überwachung aller wesentlichen Betriebsfunktionen.

Im Rahmen eines Betriebsmodus "teilautomatisiertes Fahren" sind Fahrerassistenzsysteme bekannt, die beispielsweise den Fahrer vor Kollisionen warnen und gegebenenfalls auch durch Eingriffe versuchen, Kollisionen zu vermeiden. Beispiele solcher Fahrerassistenzsysteme sind ein Notbremsassistent, ein Spur-Halte-Assistent, ein Toter-Winkel-Assistent, ein Einparkassistent und eine sogenannte Automatic Cruise Control (ACC), insbesondere für Autobahnfahrten.

Beim "hochautomatisierten Fahren" findet dagegen ein zumindest zeitweiser Übergang der Verantwortung an eine Regelungstechnik statt. Das System für die Fahrzeugführung ist dann ausgelegt, dass es zumindest für eine bestimmte Zeit und beispielsweise in einer definierten Umgebung (z.B. auf Autobahnen) die Führung des Fahrzeugs komplett übernehmen kann. Der Fahrer ist dann auch nicht mehr zur Überwachung der Regelfunktionen verpflichtet. Da dann aber immer noch kritische Situationen entstehen können (z. B. Ausfall der Sensorik, unübersichtliche Verkehrssituationen, etc.) kann das System die Führungsverantwortung auch an den Fahrer zurückgeben. Damit dies geschehen kann, muss gewährleistet sein, dass der Fahrer in einem Zeitfenster von einigen Sekunden die Führung des Kraftfahrzeugs wieder übernehmen kann. Der Betriebsmodus "hochautomatisiertes Fahren" zeichnet sich also dadurch aus, dass der Fahrer die Führung des Kraftfahrzeugs zumindest für einen definierten Zeitraum und in festgelegten Situationen nicht kontinuierlich überwachen muss. Der Fahrer muss jedoch in der Lage bleiben, die Führung des Kraftfahrzeugs in angemessener Zeit wieder übernehmen zu können. Der Betriebsmodus "hochautomatisiertes Fahren" kann von den Betriebsmodi "manuelles Fahren" und "teilautomatisiertes Fahren" auch dadurch unterschieden werden, dass das Fahrzeug im Betriebsmodus "hochautomatisiertes Fahren" eine über ein Navigationssystem eingegebene Fahrstrecke vollautomatisch fährt, wobei das Fahrzeug über ein elektronisches System automatisch beschleunigt, gebremst und gelenkt wird.

Hochautomatisiertes Fahren (HAD Highly Autonomous Driving) setzt also die Kenntnis des Umfeldes des Fahrzeugs voraus. Dazu wird das Umfeld mit einem oder mit mehreren Sensoren wie Radar, Lidar, Kamera, Ultraschallsensoren oder ähnlichen aus dem Stand der Technik bekannten Sensoren abgetastet bzw. aufgenommen. Mit Hilfe der Sensormessungen wird mithilfe ebenfalls im Stand der Technik bekannter Signalverarbeitungsverfahren dann die Belegung des Umfeldes durch Objekte erkannt. Die Belegung zeigt an, dass das Umfeld in einem bestimmten Abschnitt nicht durch das Fahrzeug befahren werden kann und gibt damit die Position des Objektes an. Zusätzlich wird der Typ bzw.' die Art der Objekte erkannt, also ob es sich um Fußgänger, Fahrzeuge, Fahrbahnbegrenzungen, Ampeln etc. handelt. Mit Hilfe der erkannten Belegungen und der Typen der Objekte wird ein Umfeldmodell erstellt, das Informationen bzw. Daten zur Belegung des Umfeldes durch Objekte, also insbesondere die Abschnitte des Umfeldes, die von Objekten belegt sind, und den Typ der Objekte bereitstellt.

Nach Definition der SAE (Society of Automotive Engineers) J3016 sind die Automatisierungsgrade beim Fahren in 5 Stufen zusammengefasst. Die Bezeichnung "System" steht dabei entweder für ein Fahrerassistenzsystem, eine Kombination von einzelnen Fahrerassistenzsystemen oder ein vollständig autonomes Antriebs-, Brems- und Lenksystem. Der Grad der Automatisierung wird zunehmend umfassender, es beginnt mit Systemen die den Fahrer informieren oder warnen (Level 0), geht weiter über Systeme die entweder nur die Längs- oder Querführung des Fahrzeugs übernehmen, wobei der Fahrer stets die Verantwortung hat die Umgebung zu beobachten bzw. als Rückfalllösung einzuspringen (Level 1). Eine noch umfassendere Automatisierung stellen Level 2-Systeme zur Verfügung, die bereits die Längs- und Querführung des Fahrzeugs übernehmen, die Beobachtung der Umgebung und die Rückfallebene weiterhin beim Fahrer verbleibt (Level 2). Systeme von Level 3 führen das Fahrzeug automatisiert ohne dass der Fahrer die Umgebung beobachten, er jedoch weiterhin als Rückfallebene fungieren muss. Im Level 4 ist bereits das System voll für die Fahrzeugführung verantwortlich und muss bei Ausfall entsprechende systembedingte Rückfalllösungen bereitstellen. Level 5 unterscheidet sich nur von 4 dadurch, dass die automatisierte Fahrzeugführung unter allen Bedingungen funktionieren muss, bei Level 4 beschränkt sich dies auf ausgewählte Situationen.

Nutzfahrzeuge mit hochautomatisierten Fahrfunktionen, die dem Fahrer die Führungsaufgabe und -verantwortung mindestens für eine begrenzte Zeit abnehmen, müssen bei Auftreten eines beliebigen Fehlers die Fahrzeugführung solange fortsetzen, bis der Fahrer die Verantwortung wieder übernimmt. Die daraus abgeleitete Systemeigenschaft "Fail-Safe" erfordert, dass Grundfunktionen wie Bremsen und Lenken weiterhin gewährleistet sind, gegebenenfalls mit funktionalen Einschränkungen. Dies bedeutet das beispielsweise, dass bei einem beliebigen Fehler das Fahrzeug zumindest innerhalb eines gewissen Rahmens weiterhin elektronisch gesteuert gebremst und gelenkt werden können muss.

Gemäß DE 10 2013 020 177 A1 sind für einen wenigstens teilautonomen Betrieb eines Kraftfahrzeugs ein Sensorsystem zur Erzeugung von Umgebungsinformationen, eine Hauptsteuerungseinheit und eine Ersatzsteuerungseinheit vorgesehen, wobei in einem nominellen Betriebszustand die Hauptsteuerungseinheit und bei einem Ausfall der Hauptsteuerungseinheit die Ersatzsteuerungseinheit die Ansteuerung der Sensorsysteme übernimmt. Unter Umständen kann die Phase lang andauern, während welcher die Hauptsteuerungseinheit ausgefallen ist und dann die Ersatzsteuerungseinheit das Fahrzeug wenigstens teilweise autonom steuern muss, wodurch eine gewisse Wahrscheinlichkeit für ein Auftreten von weiteren sicherheitskritischen Fehlern vorhanden ist.

US 9 195 232 B1 offenbart ein System zum Kompensieren von Fehlern in einer Fahrzeugsteuerung, mit einer primären Steuereinheit, einer sekundären Steuereinheit und einer Sicherheitssteuereinheit, wobei bei Erkennung eines gemeinsamen Fehlers der primären und der sekundären Steuereinheit die Sicherheitssteuereinheit die Fahrzeugfunktionen ausführt.

Die Aufgabe der vorliegenden Erfindung besteht darin, ein System der eingangserwähnten Art derart weiter zu bilden, dass es bei hoher Funktionssicherheit einfach aufgebaut ist. Die Aufgabenstellung der Erfindung betrifft daher das wenigstens teilautomatisierte Führen eines Kraftfahrzeugs. Weiterhin soll auch ein Fahrzeug mit einem solchen System zur Verfügung gestellt werden.

Diese Aufgabe wird durch die in den Patentansprüchen 1 und 13 gekennzeichneten Vorrichtungen gelöst.

Weitere vorteilhafte Ausgestaltungen und Weiterbildungen der Erfindung ergeben sich aus den abhängigen Ansprüchen.

### Offenbarung der Erfindung

Die Erfindung geht aus von einem System, durch welches ein wenigstens teilautonomer Betrieb eines Kraftfahrzeugs gesteuert wird, beinhaltend wenigstens eine Sensoreinrichtung, mit welcher die Umgebung des Kraftfahrzeugs charakterisierende Umgebungsdaten erzeugbar sind, eine elektronische Hauptsteuereinheit, welche die Umgebungsdaten von der Sensoreinrichtung empfängt und abhängig von den Umgebungsdaten (elektrische) Stellbefehle in wenigstens eine Einrichtung oder in wenigstens einen Aktuator einsteuert, welche oder welcher bei dem wenigstens teilautonomen Betrieb des Kraftfahrzeugs zum Einsatz kommt, eine erste elektronische Ersatzsteuerungseinheit, welche im Falle eines Fehlers oder Ausfalls der elektronischen Hauptsteuereinheit die Umgebungsdaten von der Sensoreinrichtung empfängt und abhängig von den Umgebungsdaten (elektrische) Stellbefehle in die wenigstens eine Einrichtung oder in den wenigstens einen Aktuator einsteuert, welche oder welcher bei dem wenigstens teilautonomen Betrieb des Kraftfahrzeugs zum Einsatz kommt, eine elektrische Lenkeinrichtung mit einem elektrischen Lenkaktuator.

Unter einem wenigstens teilautonomen Betrieb des Kraftfahrzeugs soll hier ein Betrieb wenigstens unter dem Level 3 oder unter einem demgegenüber höheren Level 4 oder 5 gemäß der eingangs beschriebenen SAE J3016 verstanden werden.

Bei einer Realisierung des wenigstens teilautonomen Betriebs des Kraftfahrzeugs muss stets mit Ausfällen und Degradierungen von Steuergeräten, Sensorik und Aktuatorik gerechnet werden. Hier vorgestellte Maßnahmen zur Verhinderung von Systemtotalausfällen sind redundante Steuerungseinheiten, welche noch durch (teil-)redundante Datenübertragung, (teil-)redundante Sensorik und (teil-)redundante Aktuatoren ergänzt werden können. Die genannten Maßnahmen stellen "Fail-Safe"-Methoden dar, die das Kraftfahrzeug in einen sicheren Zustand bringen sollen. Denn während eines wenigstens teil-autonomen Fahrbetriebs ist der Fahrer wenigstens für eine gewisse Zeit völlig von der Führung des Kraftfahrzeugs entbunden, so dass er nicht zu einem sicheren Überführen des Kraftfahrzeugs in den sicheren Zustand beitragen kann.

Die Erfindung geht weiterhin davon aus, dass in dem System eine zweite elektronische Ersatzsteuerungseinheit vorgesehen ist, welche im Falle eines Fehlers oder Ausfalls der elektronischen Hauptsteuereinheit und der ersten elektronischen Ersatzsteuerungseinheit die Umgebungsdaten von der Sensoreinrichtung empfängt und abhängig von den Umgebungsdaten (elektrische) Stellbefehle in die wenigstens eine Einrichtung oder in den wenigstens einen Aktuator einsteuert, welche oder welcher bei dem wenigstens teilautonomen Betrieb des Kraftfahrzeugs zum Einsatz kommt.

Unter einem Einsteuern von (elektrischen) Stellbefehlen in die wenigstens eine Einrichtung oder in den wenigstens einen Aktuator, welche oder welcher bei dem wenigstens teilautonomen Betrieb des Kraftfahrzeugs zum Einsatz kommt, soll verstanden werden, dass die Stellbefehle entweder direkt in den Aktuator eingesteuert werden, was beispielsweise im Falle eines elektrischen Lenkaktuators möglich ist, oder aber, dass die Stellbefehle erst in ein elektronisches Steuergerät der jeweiligen Einrichtung eingesteuert werden, welches dann die Stellbefehle in entsprechende Steuerbefehle der Aktuatoren der jeweiligen Einrichtung betätigt.

Dies kann beispielsweise bei der elektronischen Betriebsbremseinrichtung der Fall sein, welche beispielsweise über ein elektronisches Betriebsbremssteuergerät und pneumatische Betriebsbremsaktuatoren verfügt, welche von dem elektronischen Betriebsbremssteuergerät beispielsweise mittels wenigstens eines elektro-pneumatischen Druckregelmoduls elektrisch gesteuert werden. Ein solches elektro-pneumatisches Druckregelmodul beinhaltet beispielsweise ein lokales elektronisches Steuergerät, eine Einlass/Auslassventilkombination, ein Backup-Ventil sowie ein von der Einlass/Auslassventilkombination und dem Backup-Ventil steuerbares Relaisventil, dessen Arbeitsausgang dann mit wenigstens einem pneumatischen Betriebsbremsaktuator sowie mit einem integrierten Drucksensor verbunden ist, welcher den gemessenen Ist-Bremsdruck an das lokale Steuergerät zum Abgleich mit einem Soll-Bremsdruck meldet, welcher durch das Bremsanforderungssignal des elektronischen Betriebsbremssteuergeräts vorgegeben wird.

Der Ausfall oder der Fehler der elektronischen Hauptsteuereinheit und/oder der ersten elektronischen Ersatzsteuerungseinheit kann beispielsweise dadurch begründet sein, dass die elektronische Hauptsteuereinheit und/oder die erste elektronische Ersatzsteuerungseinheit (jeweils) einen Fehler aufweisen oder auch ausgefallen sind, und/oder, dass wenigstens eine elektrische Stromversorgung der elektronische Hauptsteuereinheit und der ersten elektronischen Ersatzsteuerungseinheit einen Fehler aufweist oder ausgefallen ist.

Während einer der ersten Backup-Phase, in welcher die erste elektronische Ersatzsteuerungseinheit die (teil-)autonome Führung des Kraftfahrzeugs anstatt der ausgefallenen elektronischen Hauptsteuereinheit übernimmt, kann erste elektronische Ersatzsteuerungseinheit entweder beispielsweise sämtliche Brems- und Lenkfunktionen, welche die elektronische Hauptsteuereinheit zur Verfügung gestellt hat, ersetzen bzw. zur Verfügung stellen oder auch nur einen Teil dieser Funktionen (Degradation).

Wenn es dann in der ersten Backup-Phase, in welcher die erste elektronische Ersatzsteuerungseinheit die (teil-)autonome Führung des Kraftfahrzeugs anstatt der ausgefallenen elektronischen Hauptsteuereinheit bereits übernommen hat, zu einem Ausfall oder Fehler auch der ersten elektronischen Ersatzsteuereinheit kommt, so übernimmt die zweite elektronische Ersatzsteuerungseinheit während einer zweiten Backup-Phase die wenigstens teilautonome Führung des Kraftfahrzeugs. Diese wenigstens teilautonome Führung des Kraftfahrzeugs während der zweiten Backup-Phase durch die zweite elektronische Ersatzsteuerungseinheit kann dann wiederum entweder beispielsweise sämtliche Brems- und Lenkfunktionen, welche die erste elektronische Ersatzsteuerungseinheit zur Verfügung gestellt hat, ersetzen bzw. zur Verfügung stellen oder auch nur einen Teil dieser Funktionen (Degradation).

Die wenigstens teilautonome Führung des Kraftfahrzeugs während der ersten Backup-Phase und der zweiten Backup-Phase können daher beispielsweise auf ein autonomes Bremsen ergänzt durch ein autonomes Lenken beschränkt sein. Die autonom ausgeführten Funktionen während der ersten Backup-Phase und der zweiten Backup-Phase können verschiedene Komplexitäten aufweisen und von einem lediglich autonomen Einbremsen des Kraftfahrzeugs mit Hilfe der Parkbremsaktuatoren bis zum autonomen Führen des Kraftfahrzeugs entlang von komplexen Fahrtrajektorien durch kombiniertes Eingreifen beispielsweise in die Betriebsbremseinrichtung/Lenkeinrichtung/Motorsteuerung reichen.

Insbesondere sind die elektronische Hauptsteuereinheit, die erste elektronische Ersatzsteuerungseinheit und die zweite elektronische Ersatzsteuerungseinheit voneinander unabhängige und separate Steuerungseinheiten.

Insgesamt wird daher durch die zweite Backup-Ebene bzw. die zweite Backup-Phase, welche durch die zweite elektronische Ersatzsteuerungseinheit zur Verfügung gestellt wird, die Funktionssicherheit des Systems erhöht.

Erfindungsgemäß beinhaltet das System, durch welches der wenigstens teilautonome Betrieb des Kraftfahrzeugs gesteuert wird, wenigstens eine elektronische Betriebsbremseinrichtung mit wenigstens einem elektronischen Betriebsbremssteuergerät und mit wenigstens einem elektrisch betätigbaren Betriebsbremsaktuator, eine elektrische Parkbremseinrichtung mit einem elektronischen Parkbremssteuergerät und mit wenigstens einem Parkbremsaktuator, ein elektronisches Motorsteuergerät, welches einen Motor des Kraftfahrzeugs steuert, die elektronische Hauptsteuereinheit, welche die Umgebungsdaten von der Sensoreinrichtung empfängt und abhängig von den Umgebungsdaten Stellbefehle in die elektronische Betriebsbremseinrichtung und/oder die elektrische Parkbremseinrichtung und/oder die elektrische Lenkeinrichtung und/oder in das elektronische Motorsteuergerät einsteuert, die erste elektronische Ersatzsteuerungseinheit, welche im Falle eines Fehlers oder Ausfalls der elektronischen Hauptsteuereinheit die Umgebungsdaten von der Sensoreinrichtung empfängt und abhängig von den Umgebungsdaten elektrische Stellbefehle in die elektronische Betriebsbremseinrichtung und/oder die elektrische Parkbremseinrichtung und/oder die elektrische Lenkeinrichtung und/oder in das elektronisches Motorsteuergerät einsteuert, sowie die zweite elektronische Ersatzsteuerungseinheit, welche im Falle eines Fehlers oder Ausfalls der elektronischen Hauptsteuereinheit und zugleich der ersten elektronischen Ersatzsteuerungseinheit die Umgebungsdaten von der Sensoreinrichtung empfängt und abhängig von den Umgebungsdaten Stellbefehle zumindest in die elektronische Betriebsbremseinrichtung und/oder die elektrische Parkbremseinrichtung und/oder die elektrische Lenkeinrichtung und/oder in das elektronische Motorsteuergerät einsteuert. Unter einem Einsteuern von Stellbefehlen zumindest in die elektronische Betriebsbremseinrichtung und/oder in die elektrische Parkbremseinrichtung und/oder in die elektrische Lenkeinrichtung und/oder in das elektronische Motorsteuergerät soll verstanden werden, dass die Stellbefehle entweder direkt in die jeweiligen elektrisch betätigbaren Aktuatoren eingesteuert werden, was beispielsweise im Falle eines elektrischen Lenkaktuators möglich ist, oder aber, dass die Stellbefehle erst in ein elektronisches Steuergerät der jeweiligen Einrichtung eingesteuert werden, welches dann die Stellbefehle in entsprechende Steuerbefehle der Aktuatoren der jeweiligen Einrichtung wandelt oder diese weiterleitet.

Erfindungsgemäß umfasst die zweite elektronische Ersatzsteuerungseinheit das elektronische Parkbremssteuergerät oder wird durch dieses gebildet, wobei das elektronische Parkbremssteuergerät im Falle eines Fehlers oder Ausfalls der elektronischen Hauptsteuereinheit und der ersten elektronischen Ersatzsteuerungseinheit die Umgebungsdaten von der Sensoreinrichtung empfängt und abhängig von den Umgebungsdaten zumindest die Parkbremsaktuatoren der elektrischen Parkbremseinrichtung betätigt. Insbesondere werden durch das elektronische Parkbremssteuergerät während der zweiten Backup-Phase lediglich die Parkbremsaktuatoren der elektrischen Parkbremseinrichtung betätigt oder wenigstens teilweise zugespannt oder auch vollständig zugespannt, ohne dass jedoch die elektronische Betriebsbremseinrichtung oder die elektrische Lenkeinrichtung oder das elektronische Motorsteuergerät angesteuert werden. Damit findet wenigstens während der zweiten Backup-Phase die oben bereits beschriebene Degradation der Funktionen statt, indem das Kraftfahrzeug ohne weiteren Lenkeingriff mit Hilfe der Parkbremseinrichtung zum Stehen gebracht und dann im Stillstand gehalten wird. Dadurch wird ein sicherer Zustand des Kraftfahrzeugs erreicht.

Damit übt hier eine ohnehin bei einem Kraftfahrzeug in der Regel vorhandene elektrische Parkbremseinrichtung bzw. deren elektronisches Parkbremssteuergerät eine vorteilhafte Doppelfunktion aus, indem sie (es) einerseits durch den Willen des Fahrers wie bisher manuell oder auch unabhängig vom Fahrer im Rahmen von Fahrerassistenzsystem wie Hillholder oder Anfahr-Assistent automatisiert betätigt wird und andererseits aber auch als Steuereinheit des wenigstens teilautonomen Systems abhängig von den Umweltdaten zumindest die Parkbremsaktuatoren steuert.

Durch die in den Unteransprüchen aufgeführten Maßnahmen sind vorteilhafte Weiterbildungen und Verbesserungen der in Anspruch 1 angegebenen Erfindung möglich.

Die wenigstens eine Einrichtung oder der wenigstens einen Aktuator, welche oder welcher bei dem wenigstens teilautonomen Betrieb des Kraftfahrzeugs zum Einsatz kommt, kann insbesondere wenigstens eine der folgenden Aktuatoren oder Einrichtungen sein: Eine elektronische Betriebsbremseinrichtung mit wenigstens einem elektronischen Betriebsbremssteuergerät und mit wenigstens einem elektrisch betätigbaren Betriebsbremsaktuator, eine elektrische Parkbremseinrichtung mit einem elektronischen Parkbremssteuergerät und mit wenigstens einem Parkbremsaktuator, eine elektrische Lenkeinrichtung mit einem elektrischen Lenkaktuator sowie ein elektronisches Motorsteuergerät, welches einen Motor des Kraftfahrzeugs steuert. Bei dem Motor des Kraftfahrzeugs kann es sich insbesondere um eine Bremskraftmaschine und/oder einen Elektromotor handeln.

Das elektronische Parkbremssteuergerät kann insbesondere direkt mit der Sensoreinrichtung kommunizieren, indem Signalleitungen direkt von der Sensoreinrichtung zur dem elektronischen Parkbremssteuergerät verlegt sind. Alternativ ist auch eine indirekte Datenverbindung per Datenbus denkbar, an welchen dann das elektronische Parkbremssteuergerät, die Sensoreinrichtung und unter Umständen noch weitere Busteilnehmer angeschlossen sind.

Das elektronische Parkbremssteuergerät ist insbesondere ausgebildet, dass es auf die Stellbefehle hin unabhängig davon ob sich das Kraftfahrzeug in einem Fahrzustand oder im Stillstand befindet, die Parkbremsaktuatoren betätigt. Folglich wird das während der zweiten Backup-Phase beispielsweise noch in Fahrt befindliche Kraftfahrzeug durch die Parkbremseinrichtung bzw. durch deren Parkbremsaktuatoren bis in den Stillstand abgebremst und dann dort mittels der zugespannten Parkbremsaktuatoren gehalten. Wenn aber das Kraftfahrzeug unmittelbar zu Beginn der zweiten Backup-Phase den Stillstand bereits erreicht hat, so spannt das elektronische Parkbremssteuergerät die Parkbremsaktuatoren zu, um den Stillstand des Kraftfahrzeugs sicher zu stellen.

Die elektrische Lenkeinrichtung kann insbesondere mit oder ohne durchgehende mechanische Verbindung zwischen einem Lenkrad und einem Lenkgetriebe ausgeführt sein. Die elektrische Lenkeinrichtung kann ein elektronisches Lenksteuergerät beinhalten, in welches die Stellbefehle eingesteuert werden und welche die Stellbefehle dann in dem elektrischen Lenkaktuator als Lenksteller umsetzt. Alternativ können die Stellbefehle auch direkt in den elektrischen Lenkaktuator eingesteuert werden.

Zumindest die elektronische Hauptsteuereinheit und/oder die erste elektronische Ersatzsteuerungseinheit sind (ist) bevorzugt ausgebildet (ist), dass auf der Basis der Umgebungsdaten wenigstens eine Position und/oder eine Geschwindigkeit und/oder eine Art eines sich in einer Umgebung des Kraftfahrzeugs befindlichen Objekts erfasst und als Reaktion auf die Erfassung der Position und/oder der Geschwindigkeit und/oder der Art des wenigstens einen Objekts ein Bewegungskorridor für die weitere Bewegung des Kraftfahrzeugs ermittelt wird, wobei dann abhängig von dem ermittelten Bewegungskorridor die elektrischen Stellbefehle erzeugt werden. Eine Ermittlung der Art des wenigstens einen erfassten Objekts schließt beispielsweise eine Identifikation oder Typisierung des wenigstens einen Objekts ein.

Gemäß einer Weiterbildung empfängt das wenigstens eine elektronische Betriebsbremssteuergerät der elektronischen Betriebsbremseinrichtung die Stellbefehle von der elektronischen Hauptsteuereinheit oder von der ersten elektronischen Ersatzsteuerungseinheit und ist mit Steuer- oder Regelroutinen versehen, durch welche abhängig von den Stellbefehlen der wenigstens eine elektrisch betätigbare Betriebsbremsaktuator und/oder die elektrische Lenkeinrichtung und/oder das elektronische Motorsteuergerät steuer- oder regelbar ist (sind). Damit ist bevorzugt zwischen die elektronische Hauptsteuereinheit und die erste elektronische Ersatzsteuerungseinheit und den elektrisch betätigbaren Betriebsbremsaktuator und/oder die elektrische Lenkeinrichtung und/oder das elektronische Motorsteuergerät das wenigstens eine elektronische Betriebsbremssteuergerät der elektronischen Betriebsbremseinrichtung geschaltet. Das elektronische Betriebsbremssteuergerät der elektronischen Betriebsbremseinrichtung ist dann mittels Signalleitungen mit dem wenigstens einen elektrisch betätigbaren Betriebsbremsaktuator und/oder mit der elektrischen Lenkeinrichtung und/oder mit dem elektronischen Motorsteuergerät verbunden.

Beispielsweise können in dem wenigstens einen elektronischen Betriebsbremssteuergerät der elektronischen Betriebsbremseinrichtung Routinen wenigstens eines Fahrdynamikregelsystems wie ESP, ABS, ASR usw. integriert sein, wobei die in das wenigstens eine elektronische Betriebsbremssteuergerät eingesteuerten Stellbefehle dort abhängig von den Routinen des wenigstens eines Fahrdynamikregelsystems angepasst werden können.

Da die Routinen der Fahrdynamikregelung ohnehin üblicherweise in einem elektronischen Betriebsbremssteuergerät implementiert sind, braucht das elektronische Betriebsbremssteuergerät dann nicht grundlegend modifiziert werden oder die Fahrdynamikregelung etwa in der elektronischen Hauptsteuereinheit oder in der ersten elektronische Ersatzsteuerungseinheit extra implementiert werden. Insofern wird eine Trennung zwischen einer Erzeugung der (rohen) Stellbefehle innerhalb der elektronischen Hauptsteuereinheit und in der ersten elektronische Ersatzsteuerungseinheit für den wenigstens teilautonomen Betriebs des Kraftfahrzeugs und einer unter Umständen erfolgenden Anpassung oder Modifikation dieser Stellbefehle innerhalb des wenigstens einen elektronischen Betriebsbremssteuergerät und der anschließenden Verteilung auf die oben genannten Einrichtungen bevorzugt.

Gemäß einer Weiterbildung können wenigstens ein erstes Betriebsbremssteuergerät und ein zweites Betriebsbremssteuergerät innerhalb der elektronischen Betriebsbremseinrichtung vorgesehen sein, wobei das erste Betriebsbremssteuergerät und das zweite Betriebsbremssteuergerät separate Steuergeräte sind und das erste Betriebsbremssteuergerät Stellbefehle von der elektronischen Hauptsteuereinheit und das zweite Betriebsbremssteuergerät Stellbefehle von der ersten elektronischen Ersatzsteuerungseinheit empfängt.

Im Hinblick auf den Funktionsumfang können beispielsweise das erste Betriebsbremssteuergerät und das zweite Betriebsbremssteuergerät die Betriebsbremsaktuatoren der elektronischen Betriebsbremseinrichtung radweise oder achsweise ansteuern.

Insbesondere steuert das erste Betriebsbremssteuergerät die Betriebsbremsaktuatoren der elektronischen Betriebsbremseinrichtung radweise und das zweite Betriebsbremssteuergerät die Betriebsbremsaktuatoren der elektronischen Betriebsbremseinrichtung achsweise.

Der zuletzt genannte Fall der achsweisen Steuerung der Betriebsbremsaktuatoren der elektronischen Betriebsbremseinrichtung durch das zweite Betriebsbremssteuergerät kann beispielsweise dadurch realisiert werden, dass wie in WO 2016/045652 A1 der Anmelderin der hier vorliegenden Patentanmeldung beschrieben, die elektronische Betriebsbremseinrichtung (bremsdruckgeregeltes elektronisches Bremssystem EBS) eine elektropneumatische Betriebsbremsventileinrichtung BBV, das erste Betriebsbremssteuergerät (dort EBS-ECU genannt), elektro-pneumatische Druckregelmoduln sowie pneumatische Radbremsaktuatoren beinhaltet, wobei die elektropneumatische Betriebsbremsventileinrichtung BBV ein Betriebsbremsbetätigungsorgan sowie innerhalb wenigstens eines elektrischen Betriebsbremskreises wenigstens einen elektrischen Kanal mit wenigstens einem vom Betriebsbremsbetätigungsorgan betätigbaren elektrischen Bremswertgeber zum von einer Betätigung des Betriebsbremsbetätigungsorgans abhängigen Aussteuern von Betätigungssignalen aufweist, sowie das die Betätigungssignale empfangende zweite Betriebsbremssteuergerät, (dort: FBM-ECU genannt), welche abhängig von den Betätigungssignalen Bremsanforderungssignale in das erste Betriebsbremssteuergerät (dort EBS-ECU genannt) einsteuert, sowie innerhalb wenigstens eines pneumatischen Betriebsbremskreises zwei pneumatischen Kanäle, nämlich einen Vorderachskanal und einen Hinterachskanal, bei welchen jeweils durch Betätigung des Betriebsbremsbetätigungsorgans aufgrund einer Fahrerbremsanforderung ein Steuerkolben der Betriebsbremsventileinrichtung mit einer ersten Betätigungskraft belastet wird und der Steuerkolben wenigstens ein einen Einlasssitz und einen Auslasssitz beinhaltendes Doppelsitzventil der Betriebsbremsventileinrichtung BBV direkt oder indirekt steuert, um pneumatische Bremsdrücke oder Bremssteuerdrücke für die pneumatischen Radbremsaktuatoren zu erzeugen, und wobei das zweite elektronische Betriebsbremssteuergerät (dort FBM-ECU genannt) der elektropneumatischen Betriebsbremsventileinrichtung beinhaltende Mittel zum Erzeugen einer zweiten Betätigungskraft unabhängig von einer Fahrerbremsanforderung vorgesehen sind, welche bei Vorliegen einer vom Fahrerwunsch unabhängigen Bremsanforderung in Bezug zur ersten Betätigungskraft gleichsinnig oder gegensinnig auf den wenigstens einen Steuerkolben wirkt.

Folglich wird vorzugsweise die in einer elektro-pneumatischen und elektronischen Betriebsbremseinrichtung stets vorhandene pneumatische oder elektro- pneumatische Betriebsbremsventileinrichtung so modifiziert, dass sie zum einen eine elektrische Sensierung der Bremspedalstellung ermöglicht und zum anderen die von den beiden pneumatischen Kanälen der Betriebsbremsventileinrichtung ausgesteuerten Bremsdrücke unabhängig von einer Bremspedalbetätigung erzeugen bzw. modifizieren kann, nämlich hier durch das zweite Betriebsbremssteuergerät und beispielsweise durch eine von diesem gesteuerte elektro-pneumatische Ventileinrichtung, welche dann die zweite Betätigungskraft erzeugt.

Der pneumatische Teil dieser dann "aktiven" elektro-pneumatischen Betriebsbremsventileinrichtung BBV funktioniert wie ein herkömmliches Betriebsbremsventil einer pneumatischen Betriebsbremseinrichtung und erzeugt bedingt durch die Steuerung mittels des zweiten Betriebsbremssteuergeräts zweikreisig pneumatische Bremsdrücke oder Bremssteuerdrücke in den beiden pneumatischen Betriebsbremskreisen der elektro-pneumatischen Betriebsbremseinrichtung ein. Die "aktive" elektro-pneumatische Betriebsbremsventileinrichtung BBV beinhaltet weiterhin eine Sensorik zur Sensierung der Fahrerbremsanforderung in Form eines elektrischen Bremswertgebers. Diese Sensorik ist Bestandteil des elektrischen Kanals der "aktiven" elektro-pneumatischen Betriebsbremsventileinrichtung BBV oder des elektrischen Betriebsbremskreises der elektro-pneumatischen Betriebsbremseinrichtung BBV und übermittelt ihr im fehlerfreien Betrieb die Betriebsbremsanforderung des Fahrers, welche dieser über das Betriebsbremspedal eingibt.

Damit auch im Falle eines Fehlers oder Ausfalls des elektrischen Betriebsbremskreises der elektronischen Betriebsbremseinrichtung, welcher dann das erste Betriebsbremssteuergerät umfasst, die Stellbefehle des zweiten elektronischen Betriebsbremssteuergeräts innerhalb der ersten Backup-Phase umgesetzt werden können, werden daher bevorzugt innerhalb der ersten Backup-Phase die in die beiden pneumatischen Betriebsbremskreisen (Vorderachsbremskreis, Hinterachsbremskreis) durch das zweite Betriebsbremssteuergerät eingesteuerten Bremsdrücke oder Bremssteuerdrücke zur achsweisen Steuerung der pneumatischen Betriebsbremsaktuatoren an Vorderachse und Hinterachse des Kraftfahrzeugs verwendet.

Die Funktionssicherheit des Systems wird noch weiter erhöht, wenn beispielsweise eine erste elektrische Energieversorgung vorgesehen ist, welche wenigstens die Sensoreinrichtung, die elektronische Hauptsteuereinheit und das erste Betriebsbremssteuergerät mit elektrischer Energie versorgt, und wenn eine zweite, von der ersten elektrischen Energieversorgung unabhängige Energieversorgung vorgesehen ist, welche wenigstens die Sensoreinrichtung, die erste elektronische Ersatzsteuerungseinheit und das zweite Betriebsbremssteuergerät mit elektrischer Energie versorgt, und wenn eine dritte, von der ersten elektrischen Energieversorgung und von der zweiten elektrischen Energieversorgung unabhängige Energieversorgung vorgesehen ist, welche wenigstens die zweite elektronische Ersatzsteuerungseinheit mit elektrischer Energie versorgt.

Wie oben bereits erwähnt, kann die elektronische Betriebsbremseinrichtung insbesondere eine elektro-pneumatische Betriebsbremseinrichtung mit elektro-pneumatischen Druckregelmoduln und mit pneumatischen Betriebsbremsaktuatoren sein, bei welcher der pneumatische Bremsdruck geregelt wird.

Insbesondere kann eine Detektion des Fehlers oder des Ausfalls der elektronischen Hauptsteuereinheit und/oder der ersten elektronischen Ersatzsteuerungseinheit mittels einer jeweiligen Selbstüberwachung, und/oder mittels einer Fremdüberwachung der elektronischen Hauptsteuereinheit durch die erste elektronischen Ersatzsteuerungseinheit, oder mittels einer Fremdüberwachung der ersten elektronischen Ersatzsteuerungseinheit durch die zweite elektronische Ersatzsteuerungseinheit erfolgen.

Die Erfindung betrifft auch ein Fahrzeug, insbesondere ein Nutzfahrzeug mit einem hierin beschriebenen System.

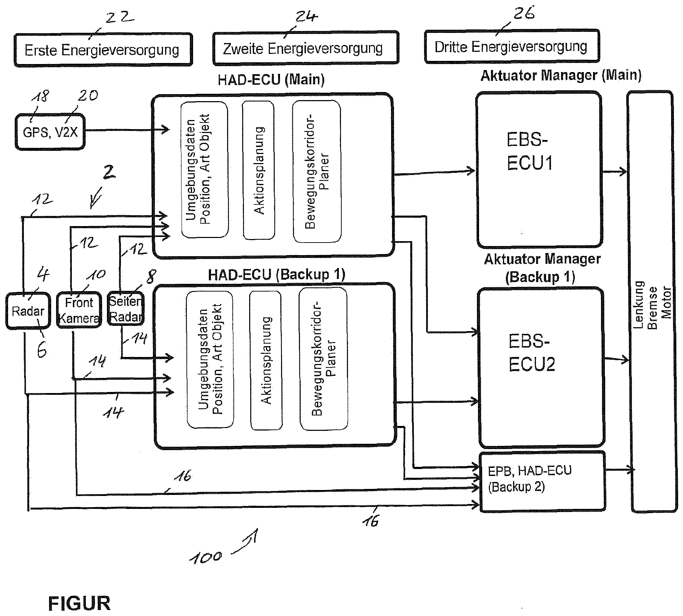

Die Erfindung wird nun mit Bezug auf die begleitende Zeichnung anhand einer bevorzugten Ausführungsform beispielhaft erläutert. Es zeigt die einzige Figur eine schematische Darstellung einer bevorzugten Ausführungsform eines Systems, durch welches ein wenigstens teilautonomer Betrieb eines Kraftfahrzeugs gesteuert wird.

### Beschreibung des Ausführungsbeispiels

Die **Figur** zeigt stark schematisiert ein System 100, durch welches ein wenigstens teilautonomer Betrieb eines Kraftfahrzeugs gesteuert oder geregelt wird.

Unter einem wenigstens teilautonomen Betrieb des Kraftfahrzeugs soll hier beispielsweise ein Betrieb wenigstens unter dem Level 3 oder unter einem demgegenüber höheren Level 4 oder 5 gemäß der eingangs beschriebenen SAE J3016 verstanden werden.

Das System 100 umfasst eine Sensoreinrichtung 2, mit welcher die Umgebung des Kraftfahrzeugs charakterisierende Umgebungsdaten erzeugbar sind, wie beispielsweise über in der Umgebung des Kraftfahrzeugs befindliche stationäre oder sich bewegende Objekte. Die Sensoreinrichtung 2 umfasst hierzu beispielsweise einen Frontradar 4 an seiner Vorderseite, einen Heckradar 6 an seiner Heckseite, auf jeder Seite einen Seitenradar 8 sowie eine Frontkamera 10. Es sind aber noch weitere Sensoren denkbar, wie zum Beispiel Infrarotsensoren.

Die Sensordaten der Sensoreinrichtung 2, welche die Umgebungsdaten darstellen werden beispielsweise über Signalleitungen 12 in eine elektronische Hauptsteuereinheit *HAD-ECU, Main* eingesteuert und dort verarbeitet.

Weiterhin werden die Sensordaten der Sensoreinrichtung über weitere Signalleitungen 14, 16 auch in eine erste elektronische Ersatzsteuerungseinheit *HAD-ECU, Backup* 1 sowie auch in eine zweite elektronische Ersatzsteuerungseinheit *HAD-ECU, Backup* 2 eingesteuert und dort verarbeitet.

Weiterhin ist an Bord des Kraftfahrzeugs auch ein *GPS* 18, welches die aktuellen Positionsdaten des Kraftfahrzeugs ermittelt. Nicht zuletzt ist auch ein Empfänger an Bord des Kraftfahrzeugs, welcher Daten von anderen Kraftfahrzeugen und/oder von stationären Sendern im Rahmen einer Vehicle-to-X-Kommunikation *V2X* 20 empfängt, welche beispielsweise Informationen und Daten über vorausfahrende Kraftfahrzeuge und über die befahrene Fahrstrecke beinhalten. Diese Daten werden hier beispielsweise lediglich in die elektronische Hauptsteuereinheit *HAD-ECU, Main* eingesteuert.

Innerhalb der elektronischen Hauptsteuereinheit *HAD-ECU, Main* und auch der ersten elektronische Ersatzsteuerungseinheit *HAD-ECU, Backup* 1 sind Routinen implementiert, welche auf der Basis der Umgebungsdaten bzw. der Daten eine Position und/oder eine Geschwindigkeit und/oder eine Art wenigstens eines sich in einer Umgebung des Kraftfahrzeugs befindlichen Objekts erfassen und als Reaktion auf die Erfassung der Position und/oder der Geschwindigkeit und/oder der Art des wenigstens einen Objekts eine Aktionsplanung durchführen wie beispielsweise "Bremsen und dem erfassten Objekt Ausweichen". Weiterhin wird ein Bewegungskorridor für die weitere Bewegung des Kraftfahrzeugs ermittelt, wobei dann abhängig von dem ermittelten Bewegungskorridor elektrische Stellbefehle erzeugt werden.

Diese elektrischen Stellbefehle steuert dann die elektronische Hauptsteuereinheit *HAD-ECU, Main* in ein erstes elektronisches Bremssteuergerät *EBS-ECU1* und die erste elektronische Ersatzsteuerungseinheit *HAD-ECU, Backup* 1 in ein zweites elektronisches Bremssteuergerät *EBS-ECU2* ein, wobei sich dies nur dann auswirkt, wenn das elektronische Hauptsteuereinheit *HAD-ECU, Main* nicht funktionsfähig ist.

Die beiden elektronischen Bremssteuergeräte *EBS-ECU1* und *EBS-ECU2* sind Bestandteile einer elektronischen Betriebsbremseinrichtung, welche hier beispielsweise als elektronisch bremsdruckgeregeltes Betriebsbremssystem EBS ausgeführt ist. Die elektronische Betriebsbremseinrichtung beinhaltet weiterhin pneumatische Bremsdruckakuatoren an der Vorderachse und an der Hinterachse des Kraftfahrzeugs und beispielsweise zwei Ein-Kanal-Druckregelmodule an der Vorderachse und ein 2-Kanal-Druckregelmodul an der Hinterachse. Die pneumatischen Bremsdruckakuatoren sind beispielsweise als pneumatische Betriebsbremszylinder ausgeführt und radweise angeordnet.

Ein solches elektro-pneumatisches Druckregelmodul beinhaltet beispielsweise ein lokales elektronisches Steuergerät, für jeden Kanal eine Einlass/Auslassventilkombination, ein Backup-Ventil sowie ein von der Einlass/Auslassventilkombination und dem Backup-Ventil steuerbares Relaisventil, dessen Arbeitsausgang dann mit wenigstens einem pneumatischen Betriebsbremsaktuator sowie mit einem integrierten Drucksensor verbunden ist, welcher den gemessenen Ist-Bremsdruck an das lokale Steuergerät zum Abgleich mit einem Soll-Bremsdruck meldet, welcher durch das von dem jeweiligen elektronischen Betriebsbremssteuergerät ausgesteuerten Betriebsbremsanforderungssignal vorgegeben wird.

In der Figur werden die Komponenten "Druckregelmodule" und "pneumatische Betriebsbremsaktuatoren" der elektronischen Betriebsbremseinrichtung vereinfacht als "Bremse" angegeben, welche dann von den beiden elektronischen Bremssteuergeräte *EBS-ECU1* und *EBS-ECU2* unabhängig gesteuert werden können.

Beispielsweise können in den beiden elektronischen Betriebsbremssteuergeräten *EBS-ECU1* und *EBS-ECU2* der elektronischen Betriebsbremseinrichtung EBS Routinen wenigstens eines Fahrdynamikregelsystems wie ESP, ABS, ASR usw. integriert sein, wobei die in die elektronischen Betriebsbremssteuergeräte *EBS-ECU1* und *EBS-ECU2* eingesteuerten Stellbefehle dort abhängig von den Routinen des wenigstens eines Fahrdynamikregelsystems angepasst werden können, um beispielsweise instabiles Fahrverhalten, übermäßigen Bremsschlupf und/oder Antriebsschlupf zu vermeiden.

Das erste elektronische Betriebsbremssteuergerät *EBS-ECU1* kann beispielsweise die pneumatischen Betriebsbremsaktuaroren radweise ansteuern, während das zweite elektronische Betriebsbremssteuergerät *EBS-ECU2* die pneumatischen Betriebsbremsaktuaroren lediglich achsweise, d.h. getrennt für die Vorderachse und die Hinterachse ansteuern kann.

Das System 100 beinhaltet weiterhin eine elektrische Parkbremseinrichtung EPB mit einem elektronischen Parkbremssteuergerät EPB-ECU und mit beispielsweise zwei Parkbremsaktuatoren, die hier beispielsweise als pneumatische Federspeicherbremszylinder an der Hinterachse ausgeführt sind. Das elektronische Parkbremssteuergerät EPB-ECU beinhaltet insbesondere eine Elektromagnetventileinrichtung, durch welche die Federspeicherbremszylinder be- und entlüftet werden können. Beispielsweise bildet das elektronische Parkbremssteuergerät EPB-ECU der elektrischen Parkbremseinrichtung EPB hier die zweite elektronische Ersatzsteuerungseinheit *HAD-ECU, Backup2.*

Das elektronische Parkbremssteuergerät *EPB-ECU* ist wiederum über die Signalleitungen 16 mit der Sensoreinrichtung 2 verbunden und verfügt über Routinen, welche abhängig von den von der Sensoreinrichtung 2 gelieferten Umweltdaten die pneumatischen Parkbremsaktuatoren teilweise oder vollständig zuspannen oder teilweise oder vollständig lösen kann. Bevorzugt kann hier das elektronische Parkbremssteuergerät *EPB-ECU* aber die Signale der Seitenradars 8, des GPS 18 und des V2X 20 nicht empfangen.

In der **Figur** werden die Komponenten "Parkbremsaktuatoren" der elektrischen Parkbremseinrichtung vereinfacht als "Bremse" angegeben, welche dann von dem elektronischen Parkbremssteuergerät EPB gesteuert werden können.

Weiterhin umfasst dass System 100 auch eine elektrische Lenkeinrichtung, welche mit oder ohne durchgehende mechanische Verbindung zwischen einem Lenkrad und einem Lenkgetriebe ausgeführt sein kann. Die elektrische Lenkeinrichtung beinhaltet ein elektronisches Lenksteuergerät, in welches die Stellbefehle der beiden elektronischen Bremssteuergeräte *EBS-ECU1* und *EBS-ECU2* eingesteuert werden und welche die Stellbefehle dann in dem elektrischen Lenkaktuator als Lenksteller umsetzt.

In der **Figur** werden die Komponenten "elektronisches Lenksteuergerät" und "elektrischen Lenkaktuator" der elektrischen Lenkeinrichtung als "Lenkung" angegeben.

Nicht zuletzt umfasst das System 100 auch ein elektronisches Motorsteuergerät, welches einen Motor des Kraftfahrzeugs steuert und welches in der Figur mit der Bezeichnung "Motor" symbolisiert ist.

Um die Funktionssicherheit des Systems zu erhöhten, ist eine erste elektrische Energieversorgung 22 vorgesehen, welche beispielsweise die Sensoreinrichtung 2, die elektronische Hauptsteuereinheit *HAD-ECU, Main* und das erste Betriebsbremssteuergerät *EBS-ECU1* mit elektrischer Energie versorgt, weiterhin eine zweite, von der ersten elektrischen Energieversorgung 22 unabhängige Energieversorgung 24, welche beispielsweise die Sensoreinrichtung 2, die erste elektronische Ersatzsteuerungseinheit *HAD-ECU, Backup1* und das zweite Betriebsbremssteuergerät *EBS-ECU2* mit elektrischer Energie versorgt. Weiterhin ist eine dritte, von der ersten elektrischen Energieversorgung 22 und von der zweiten elektrischen Energieversorgung 24 unabhängige Energieversorgung 26 vorgesehen, welche die zweite elektronische Ersatzsteuerungseinheit *HAD-ECU, Backup2* mit elektrischer Energie versorgt.

Insbesondere erfolgt eine Detektion des Fehler oder des Ausfalls der elektronischen Hauptsteuereinheit *HAD-ECU, Main* und der ersten elektronischen Ersatzsteuerungseinheit *HAD-ECU, Backup1* jeweils mittels Selbstüberwachung. Alternativ kann natürlich auch einer Fremdüberwachung der elektronischen Hauptsteuereinheit *HAD-ECU, Main* durch die erste elektronische Ersatzsteuerungseinheit *HAD-ECU, Backup1* und eine Fremdüberwachung der ersten elektronischen Ersatzsteuerungseinheit *HAD-ECU, Backup1* durch die zweite elektronische Ersatzsteuerungseinheit *HAD-ECU, Backup2* erfolgen.

Im Normalbetrieb empfängt die elektronische Hauptsteuereinheit *HAD-ECU, Main* die Umgebungsdaten von der Sensoreinrichtung 2 und Daten vom GPS 18 und vom V2X 20 und erfasst auf der Basis dieser Umgebungsdaten eine Position und/oder eine Geschwindigkeit und/oder eine Art eines sich in einer Umgebung des Kraftfahrzeugs befindlichen Objekts. Weiterhin führt sie als Reaktion auf die Erfassung der Position und/oder der Geschwindigkeit und/oder der Art des Objekts sowie der Daten vom GPS 18 und V2X 20 eine Aktionsplanung durch wie beispielsweise "Bremsen und dem erfassten Objekt Ausweichen". Außerdem wird ein Bewegungskorridor für die weitere Bewegung des Kraftfahrzeugs ermittelt, wobei dann abhängig von dem ermittelten Bewegungskorridor elektrische Stellbefehle erzeugt werden, welche in das erste Bremssteuergerät *EBS-ECU1* eingesteuert werden.

Im Folgenden sei beispielsweise angenommen, dass es sich bei dem erfassten Objekt um einen Fußgänger handelt, welcher sich auf dem Fahrweg des Kraftfahrzeugs in Front befindet und welchem das Kraftfahrzeug durch einen automatischen Eingriff nun ausweichen soll, was als Ausweichmanöver bezeichnet wird.

Das erste elektronische Betriebsbremssteuergerät *EBS-ECU1* ist mit Steueroder Regelroutinen versehen, durch welche abhängig von den Stellbefehlen die Betriebsbremsaktuatoren, die elektrische Lenkeinrichtung und das elektronische Motorsteuergerät derart gesteuert oder geregelt werden, dass das Kraftfahrzeug einerseits beispielsweise durch Motorbremsung und durch ein teilweises Zuspannen der Betriebsbremsaktuatoren etwas abgebremst und andererseits an dem Fußgänger automatisch, d.h. ohne Zutun des Fahrers vorbei gelenkt wird. Hierdurch steuert das System das Ausweichmanöver als autonomen Betrieb des Kraftfahrzeugs.

Bei dem Ausweichmanöver steuert das erste elektronische Betriebsbremssteuergerät *EBS-ECU1* vorzugsweise die pneumatischen Betriebsbremsaktuatoren radweise, d.h. für jedes Rad einzeln an und kann dadurch beispielsweise während der Bremsung eine Fahrdynamikregelung (ESP) und ein radweise Bremsschlupfregelung (ABS) ausführen.

Falls nun während des Ausweichmanövers die elektronische Hauptsteuereinheit *HAD-ECU* ausfällt, sei es durch einen Fehler in der ersten elektrischen Energieversorgung 22 oder einen Fehler in der elektronische Hauptsteuereinheit *HAD-ECU* selbst, so wird dieser Fehler hier beispielsweise durch die Selbstüberwachung der Hauptsteuereinheit *HAD-ECU* festgestellt und an die erste elektronische Ersatzsteuerungseinheit *HADECU, Backup1* gemeldet. Hierauf schaltet die die erste elektronische Ersatzsteuerungseinheit *HAD-ECU, Backup1* beispielsweise die Hauptsteuereinheit *HAD-ECU* ab, damit der Fehler nicht zu negativen und ungewollten Auswirkungen führen kann.

Dann versucht die erste elektronische Ersatzsteuerungseinheit *HAD-ECU, Backup1* das bereits eingeleitete Ausweichmanöver zu Ende zu führen, indem sie ihrerseits auf den erfassten Umgebungsdaten erzeugte Stellbefehle in das zweite elektronische Betriebsbremssteuergerät *EBS-ECU2* einsteuert. Die zeitliche Phase, während der das Ausweichmanöver durch die erste elektronische Ersatzsteuerungseinheit *HAD-ECU, Backup1* gesteuert wird, sei als erste Backup-Phase bezeichnet.

Abhängig von den Stellbefehlen steuert dann das zweite elektronische Betriebsbremssteuergerät *EBS-ECU2* anstatt des ersten elektronischen Betriebsbremssteuergeräts *EBS-ECU1,* welches ja nun nicht mehr durch die defekte elektronische Hauptsteuereinheit *HAD-ECU* angesteuert werden kann, beispielsweise die Betriebsbremsaktuatoren, die elektrische Lenkeinrichtung und das elektronische Motorsteuergerät an, um das bereits eingeleitete Ausweichmanöver fortzusetzen und wenn möglich zu Ende zu bringen.

Da das zweite elektronische Betriebsbremssteuergerät *EBS-ECU2* beispielsweise die pneumatischen Betriebsbremsaktuaroren lediglich achsweise, d.h. getrennt für die Vorderachse und die Hinterachse ansteuern kann, entfällt bei der Betriebsbremsung als Teil des Ausweichmanövers die Fahrdynamikregelung (ESP) und die radweise Bremsschlupfregelung (ABS), weshalb die durch die zweite elektronische Betriebsbremssteuergerät *EBS-ECU2* fortgeführte Betriebsbremsung eine Degradation gegenüber der durch die erste elektronische Betriebsbremssteuergerät *EBS-ECU1* eingeleiteten Betriebsbremsung darstellt. Alternativ hierzu könnte jedoch das zweite elektronische Betriebsbremssteuergerät *EBS-ECU2* hinsichtlich seiner Steuerungsmöglichkeiten denselben Funktionsumfang aufweisen wie das erste elektronische Betriebsbremssteuergerät *EBS-ECU1* aufweisen, so dass dann keine Degradation vorliegt.

Falls nun während des durch die erste elektronische Ersatzsteuerungseinheit *HAD-ECU, Backup1* fortgesetzten Ausweichmanövers auch die erste elektronische Ersatzsteuerungseinheit *HAD-ECU, Backup1* ausfällt, sei es durch einen Fehler in der zweiten Energieversorgung 24 oder einen Fehler in der ersten elektronischen Ersatzsteuerungseinheit *HAD-ECU, Backup1* selbst, so wird dieser Fehler hier beispielsweise durch die Selbstüberwachung der ersten elektronischen Ersatzsteuerungseinheit *HAD-ECU, Backup1* festgestellt und an die zweite elektronische Ersatzsteuerungseinheit *HAD-ECU, Backup2* gemeldet. Hierauf schaltet die zweite elektronische Ersatzsteuerungseinheit *HAD-ECU, Backup2* beispielsweise die erste elektronische Ersatzsteuerungseinheit *HAD-ECU, Backup1* ab, damit der Fehler nicht zu negativen und ungewollten Auswirkungen führen kann.

Nun spannt die zweite elektronische Ersatzsteuerungseinheit *HAD-ECU, Backup2,* welche hier beispielsweise durch das elektronische Parkbremssteuergerät *EPB* gebildet wird die Parkbremsaktuatoren beispielsweise teilweise zu, so dass dadurch das sich angenommen am Ende der ersten Backup-Phase noch in Fahrt befindliche Kraftfahrzeug abgebremst wird.

Die zeitliche Phase, während der das Ausweichmanöver durch die zweite elektronische Ersatzsteuerungseinheit *HAD-ECU, Backup2* fortgesetzt wird, sei hier als zweite Backup-Phase bezeichnet.

Beispielsweise ist aber das elektronische Parkbremssteuergerät *EPB* nicht in der Lage, die Betriebsbremseinrichtung, welche ohnehin nicht mehr funktionsfähig ist oder die Lenkeinrichtung oder auch die Motorsteuerung zu beeinflussen, so dass eine Fortführung des Ausweichmanövers hier beispielsweise lediglich in einem Zuspannen der Parkbremsaktuatoren besteht. Folglich zeichnet sich die zweite Backup-Phase gegenüber der ersten Backup-Phase durch eine weitere Degradation bezüglich des Funktionsumfangs aus. Alternativ kann während der zweiten Backup-Phase auch keine Degradation im Funktionsumfang gegenüber der ersten Backup-Phase vorgesehen sein.

Wenn das Kraftfahrzeug dann in den Stillstand gekommen ist, werden die Parkbremsaktuatoren vollständig zugespannt, um einen sicheren Zustand des Kraftfahrzeugs zu erreichen, so dass die zweite Backup-Phase mit dem vollständigen Zuspannen der Parkbremsaktuatoren und damit auch das Ausweichmanöver endet, auch wenn das ursprünglich geplante Ausweichmanöver nach Passieren des Fußgängers eine Weiterfahrt und dann auch ein Wiedereinscheren auf die ursprünglich geplante Fahrroute zum Inhalt hatte.

### BEZUGSZEICHENLISTE

- HAD ECU, Main: elektronische Hauptsteuereinheit
- HAD-ECU, Backup1: erste elektronische Ersatzsteuerungseinheit
- HAD-ECU, Backup2: zweite elektronische Ersatzsteuerungseinheit
- EBS-ECU1: zweites elektronisches Betriebsbremssteuergerät
- EBS-ECU2: zweites elektronisches Betriebsbremssteuergerät
- EPB: elektrische Parkbremseinrichtung
- EPB-ECU: elektronisches Parkbremssteuergerät
- 100: System
- 2: Sensoreinrichtung
- 4: Frontradar
- 6: Heckradar
- 8: Seitenradar
- 10: Frontkamera
- 12: Signalleitungen
- 14: Signalleitungen
- 16: Signalleitungen
- 18: GPS
- 20: V2X
- 22: erste elektrische Energieversorgung
- 24: zweite elektrische Energieversorgung
- 26: dritte elektrische Energieversorgung

## Patentansprüche

1. System (100), durch welches ein wenigstens teilautonomer Betrieb eines Kraftfahrzeugs gesteuert wird, beinhaltend wenigstens
a) eine Sensoreinrichtung (2), mit welcher die Umgebung des Kraftfahrzeugs charakterisierende Umgebungsdaten erzeugbar sind,
b) eine elektronische Hauptsteuereinheit (HAD-ECU Main), welche die Umgebungsdaten von der Sensoreinrichtung (2) empfängt und abhängig von den Umgebungsdaten Stellbefehle in wenigstens eine Einrichtung oder in wenigstens einen Aktuator einsteuert, welche oder welcher bei dem wenigstens teilautonomen Betrieb des Kraftfahrzeugs zum Einsatz kommt,
c) eine erste elektronische Ersatzsteuerungseinheit (HAD-ECU Backup 1), welche im Falle eines Fehlers oder Ausfalls der elektronischen Hauptsteuereinheit (HAD-ECU Main) die Umgebungsdaten von der Sensoreinrichtung (2) empfängt und abhängig von den Umgebungsdaten Stellbefehle in die wenigstens eine Einrichtung oder in den wenigstens einen Aktuator einsteuert, welche oder welcher bei dem wenigstens teilautonomen Betrieb des Kraftfahrzeugs zum Einsatz kommt,
d) eine zweite elektronische Ersatzsteuerungseinheit (HAD-ECU Backup 2), welche im Falle eines Fehlers oder Ausfalls der elektronischen Hauptsteuereinheit (HAD-ECU Main) und der ersten elektronischen Ersatzsteuerungseinheit (HAD-ECU Backup 1) die Umgebungsdaten von der Sensoreinrichtung (2) empfängt und abhängig von den Umgebungsdaten Stellbefehle in die wenigstens eine Einrichtung oder in den wenigstens einen Aktuator einsteuert, welche oder welcher bei dem wenigstens teilautonomen Betrieb des Kraftfahrzeugs zum Einsatz kommt,
e) eine elektrische Lenkeinrichtung mit einem elektrischen Lenkaktuator,
f) eine elektronische Betriebsbremseinrichtung (EBS) mit wenigstens einem elektronischen Betriebsbremssteuergerät (EBS-ECU1, EBS-ECU2) und mit wenigstens einem Betriebsbremsaktuator,
g) eine elektrische Parkbremseinrichtung (EPB) mit einem elektronischen Parkbremssteuergerät (EPB-ECU) und mit wenigstens einem Parkbremsaktuator,
h) ein elektronisches Motorsteuergerät, welches einen Motor des Kraftfahrzeugs steuert, wobei
i) die elektronische Hauptsteuereinheit (HAD-ECU Main) abhängig von den Umgebungsdaten Stellbefehle in die elektronische Betriebsbremseinrichtung (EBS) und/oder die elektrische Parkbremseinrichtung (EPB) und/oder die elektrische Lenkeinrichtung und/oder in das elektronische Motorsteuergerät einsteuert, und wobei
j) die erste elektronische Ersatzsteuerungseinheit (HAD-ECU Backup 1) abhängig von den Umgebungsdaten Stellbefehle in die elektronische Betriebsbremseinrichtung (EBS) und/oder die elektrische Parkbremseinrichtung (EPB) und/oder die elektrische Lenkeinrichtung und/oder in das elektronische Motorsteuergerät einsteuert, und wobei
k) die zweite elektronische Ersatzsteuerungseinheit (HAD-ECU Backup 2) abhängig von den Umgebungsdaten Stellbefehle zumindest in die elektronische Betriebsbremseinrichtung (EBS) und/oder die elektrische Parkbremseinrichtung (EPB) und/oder die elektrische Lenkeinrichtung und/oder in das elektronische Motorsteuergerät einsteuert, und wobei
l) die zweite elektronische Ersatzsteuerungseinheit (HAD-ECU Backup 2) das elektronische Parkbremssteuergerät (EPB-ECU) umfasst oder durch dieses gebildet wird, wobei das elektronische Parkbremssteuergerät (EPB-ECU) im Falle eines Fehlers oder Ausfalls der elektronischen Hauptsteuereinheit (HAD-ECU Main) und der ersten elektronischen Ersatzsteuerungseinheit (HAD-ECU Backup 1) die Umgebungsdaten von der Sensoreinrichtung (2) empfängt und abhängig von den Umgebungsdaten zumindest die Parkbremsaktuatoren der elektrischen Parkbremseinrichtung (EPB) betätigt.

2. System nach Anspruch 1, **dadurch gekennzeichnet, dass** das elektronische Parkbremssteuergerät (EPB-ECU) ausgebildet ist, dass es auf die Stellbefehle hin unabhängig davon ob sich das Kraftfahrzeug in einem Fahrzustand oder im Stillstand befindet, die Parkbremsaktuatoren betätigt.

3. System nach einem der vorhergehenden Ansprüche, **dadurch gekennzeichnet, dass** das elektronische Parkbremssteuergerät (EPB-ECU) direkt mittels von der Sensoreinrichtung zur dem elektronischen Parkbremssteuergerät verlegte Signalleitungen mit der Sensoreinrichtung (2) kommuniziert.

4. System nach einem der vorhergehenden Ansprüche, **dadurch gekennzeichnet, dass** die elektrische Lenkeinrichtung ein elektronisches Lenksteuergerät beinhaltet, in welches die Stellbefehle eingesteuert werden und welche die Stellbefehle dann in dem elektrischen Lenkaktuator umsetzt.

5. System nach einem der vorhergehenden Ansprüche, **dadurch gekennzeichnet, dass** das wenigstens eine elektronische Betriebsbremssteuergerät (EBS-ECU1, EBS-ECU2) der elektronischen Betriebsbremseinrichtung (EBS) die Stellbefehle der elektronischen Hauptsteuereinheit (HAD-ECU Main) oder der ersten elektronischen Ersatzsteuerungseinheit (HAD-ECU Backup 1) empfängt und mit Steuer- oder Regelroutinen versehen ist, durch welche abhängig von den Stellbefehlen der wenigstens eine Betriebsbremsaktuator und/oder die elektrische Parkbremseinrichtung (EPB) und/oder die elektrische Lenkeinrichtung und/oder das elektronische Motorsteuergerät steuer- oder regelbar ist (sind).

6. System nach einem der vorhergehenden Ansprüche, **dadurch gekennzeichnet, dass** in dem wenigstens einen elektronischen Betriebsbremssteuergerät (EBS-ECU1, EBS-ECU2) der elektronischen Betriebsbremseinrichtung (EBS) Routinen wenigstens eines Fahrdynamikregelsystems (ESP, ABS, ASR) integriert sind, wobei die in das wenigstens eine elektronische Betriebsbremssteuergerät (EBS-ECU1, EBS-ECU2) eingesteuerten Stellbefehle dort abhängig von den Routinen des wenigstens eines Fahrdynamikregelsystems (ESP, ABS, ASR) angepasst werden.

7. System nach einem der vorhergehenden Ansprüche, **dadurch gekennzeichnet, dass** wenigstens ein erstes Betriebsbremssteuergerät (EBS-ECU1) und ein zweites Betriebsbremssteuergerät (EBS-ECU2) innerhalb der elektronischen Betriebsbremseinrichtung vorgesehen sind, wobei das erste Betriebsbremssteuergerät (EBS-ECU1) und das zweite Betriebsbremssteuergerät (EBS-ECU2) separate Steuergeräte sind und das erste Betriebsbremssteuergerät (EBS-ECU1) Stellbefehle von der elektronischen Hauptsteuereinheit (HAD-ECU Main) und das zweite Betriebsbremssteuergerät (EBS-ECU2) Stellbefehle von der ersten elektronischen Ersatzsteuerungseinheit (HAD-ECU Backup 1) empfängt.

8. System nach Anspruch 7, **dadurch gekennzeichnet, dass** das erste Betriebsbremssteuergerät (EBS-ECU1) und das zweite Betriebsbremssteuergerät (EBS-ECU2) Betriebsbremsaktuatoren der elektronischen Betriebsbremseinrichtung radweise oder achsweise ansteuern.

9. System nach einem der vorhergehenden Ansprüche, **dadurch gekennzeichnet, dass** die elektronische Betriebsbremseinrichtung (EBS) durch eine elektro-pneumatische Betriebsbremseinrichtung mit elektro-pneumatischen Druckregelmoduln und mit pneumatischen Betriebsbremsaktuatoren gebildet wird, bei welcher der pneumatische Bremsdruck geregelt wird.

10. System nach einem der Ansprüche 7 oder 8, **dadurch gekennzeichnet, dass**
a) eine erste elektrische Energieversorgung (22) vorgesehen ist, welche wenigstens die Sensoreinrichtung (2), die elektronische Hauptsteuereinheit (HAD-ECU Main) und das erste Betriebsbremssteuergerät (EBS-ECU1) mit elektrischer Energie versorgt, und dass
b) eine zweite, von der ersten elektrischen Energieversorgung (22) unabhängige Energieversorgung (24) vorgesehen ist, welche wenigstens die Sensoreinrichtung, die erste elektronische Ersatzsteuerungseinheit (HAD-ECU Backup 1) und das zweite Betriebsbremssteuergerät (EBS-ECU2) mit elektrischer Energie versorgt, und dass
c) eine dritte, von der ersten elektrischen Energieversorgung (22) und von der zweiten elektrischen Energieversorgung (24) unabhängige Energieversorgung (26) vorgesehen ist, welche wenigstens die zweite elektronische Ersatzsteuerungseinheit (HAD-ECU Backup 2) mit elektrischer Energie versorgt.

11. System nach einem der vorhergehenden Ansprüche, **dadurch gekennzeichnet, dass** zumindest die elektronische Hauptsteuereinheit (HAD-ECU Main) und/oder die erste elektronische Ersatzsteuerungseinheit (HAD-ECU Backup 1) ausgebildet (ist) sind, dass auf der Basis der Umgebungsdaten wenigstens eine Position und/oder eine Geschwindigkeit und/oder eine Art wenigstens eines sich in einer Umgebung des Kraftfahrzeugs befindlichen Objekts erfasst und als Reaktion auf die Erfassung der Position und/oder der Geschwindigkeit und/oder der Art des wenigstens einen Objekts ein Bewegungskorridor für die weitere Bewegung des Kraftfahrzeugs ermittelt wird, wobei dann abhängig von dem ermittelten Bewegungskorridor die Stellbefehle erzeugt werden.

12. System nach einem der vorhergehenden Ansprüche, **dadurch gekennzeichnet, dass** eine Detektion des Fehlers oder des Ausfalls der elektronischen Hauptsteuereinheit (HAD-ECU Main) und/oder der ersten elektronischen Ersatzsteuerungseinheit (HAD-ECU Backup 1) mittels
a) einer jeweiligen Selbstüberwachung, und/oder mittels
b) einer Fremdüberwachung der elektronischen Hauptsteuereinheit (HAD-ECU Main) durch die erste elektronischen Ersatzsteuerungseinheit (HAD-ECU Backup 1), oder mittels einer Fremdüberwachung der ersten elektronischen Ersatzsteuerungseinheit (HAD-ECU Backup 1) durch die zweite elektronische Ersatzsteuerungseinheit (HAD-ECU Backup 2) erfolgt.

13. Fahrzeug, insbesondere Nutzfahrzeug mit einem System (100) nach wenigstens einem der vorhergehenden Ansprüche.

## Claims

1. System (100) for controlling an at least semi-autonomous operation of a motor vehicle, including at least
a) a sensor apparatus (2) with which environment data characterising the environment of the motor vehicle are generated,
b) an electronic main control unit (HAD-ECU Main) which receives the environment data from the sensor apparatus (2) and inputs control commands into at least one apparatus or into at least one actuator depending on the environment data, which apparatus or actuator is used in the at least semi-autonomous operation of the motor vehicle,
c) a first electronic backup control unit (HAD-ECU Backup 1) which receives the environment data from the sensor apparatus (2) in the event of an error or failure in the electronic main control unit (HAD-ECU Main) and inputs control commands into the at least one apparatus or into the at least one actuator depending on the environment data, which apparatus or actuator is used in the at least semi-autonomous operation of the motor vehicle,
d) a second electronic backup control unit (HAD-ECU Backup'2) which receives the environment data from the sensor apparatus (2) in the event of an error or failure in the electronic main control unit (HAD-ECU Main) and the first electronic backup control unit (HAD-ECU Backup 1) and inputs control commands into the at least one apparatus or into the at least one actuator depending on the environment data, which apparatus or actuator is used in the at least semi-automated operation of the motor vehicle,
e) an electrical steering apparatus having an electrical steering actuator,
f) an electronic service brake apparatus (EBS) having at least one electronic service brake controller (EBS-ECU1, EBS- ECU2) and having at least one service brake actuator,
g) an electrical parking brake apparatus (EPB) having an electronic parking brake controller (EPB-ECU) and having at least one parking brake actuator,
h) an electronic engine controller which controls an engine of the motor vehicle, wherein
i) the electronic main control unit (HAD-ECU Main) inputs control commands into the electronic service brake apparatus (EBS) and/or the electrical parking brake apparatus (EPB) and/or the electrical steering apparatus and/or into the electronic engine controller depending on the environment data, and wherein
j) the first electronic backup control unit (HAD-ECU Backup 1) inputs control commands into the electronic service brake apparatus (EBS) and/or the electrical parking brake apparatus (EPB) and/or the electrical steering apparatus and/or into the electronic engine controller depending on the environment data, and wherein
k) the second electronic backup control unit (HAD-ECU Ba-ckup 2) inputs control commands at least into the electronic service brake apparatus (EBS) and/or the electrical parking brake apparatus (EPB) and/or the electrical
steering apparatus and/or into the electronic engine controller depending on the environment data, and wherein
l) the second electronic backup control unit (HAD-ECU Backup 2) comprises or is formed by the electronic parking brake controller (EPB-ECU), wherein, in the event of an error or failure in the electronic main control unit (HAD-ECU Main) and the first electronic backup control unit (HAD-ECU Backup 1), the electronic parking brake controller (EPB-ECU) receives the environment data from the sensor apparatus (2) and actuates at least the parking brake actuators of the electrical parking brake apparatus (EPB) depending on the environment data.

2. System according to claim 1, **characterised in that** the electronic parking brake controller (EPB-ECU) is configured so as to actuate the parking brake actuators in response to the control commands, irrespective of whether the motor vehicle is in a driving state or at a standstill.

3. System according to any of the preceding claims, **characterised in that** the electronic parking brake controller (EPB-ECU) communicates directly with the sensor apparatus (2) by means of signal lines routed from the sensor apparatus to the electronic parking brake controller.

4. System according to any of the preceding claims, **characterised in that** the electrical steering apparatus comprises an electronic steering controller into which the control commands are input and which then implements the control commands in the electrical steering actuator.

5. System according to any of the preceding claims, **characterised in that** the at least one electronic service brake controller (EBS-ECU1, EBS-ECU2) of the electronic service brake apparatus (EBS) receives the control commands of the electronic main control unit (HAD-ECU Main) or of the first electronic backup control unit (HAD-ECU Backup 1) and is provided with open-loop or closed-loop control routines by which, depending on the control commands, the at least one service brake actuator and/or the electrical parking brake apparatus (EPB) and/or the electrical steering apparatus and/or the electronic engine controller can be controlled in an open-loop or closed-loop manner.

6. System according to any of the preceding claims, **characterised in that** routines of at least one driving dynamics control system (ESP, ABS, ASR) are integrated into the at least one electronic service brake controller (EBS-ECU1, EBS-ECU2) of the electronic service brake apparatus (EBS), wherein the control commands input into the at least one electronic service brake controller (EBS-ECU1, EBS-ECU2) are adapted there depending on the routines of the at least one driving dynamics control system (ESP, ABS, ASR).

7. System according to any of the preceding claims, **characterised in that** at least a first service brake controller (EBS-ECU1) and a second service brake controller (EBS-ECU2) are provided within the electronic service brake apparatus, wherein the first service brake controller (EBS-ECU1) and the second service brake controller (EBS-ECU2) are separate controllers and the first service brake controller (EBS-ECU1) receives control commands from the electronic main control unit (HAD-ECU Main) and the second service brake controller (EBS-ECU2) receives control commands from the first electronic backup control unit (HAD-ECU Backup 1).

8. System according to claim 7, **characterised in that** the first service brake controller (EBS-ECU1) and the second service brake controller (EBS-ECU2) activate service brake actuators of the electronic service brake apparatus for each wheel individually or for each axle individually.

9. System according to any of the preceding claims, **characterised in that** the electronic service brake apparatus (EBS) is formed by an electropneumatic service brake apparatus having electropneumatic pressure control modules and having pneumatic service brake actuators, the pneumatic brake pressure being controlled in said electropneumatic service brake apparatus.

10. System according to any of claims 7 or 8, **characterised in that**
a) a first electrical energy supply (22) is provided which supplies electrical energy to at least the sensor apparatus (2), the electronic main control unit (HAD-ECU Main) and the first service brake controller (EBS-ECU1), and **in that**
b) a second energy supply (24) is provided which is independent of the first electrical energy supply (22) and supplies electrical energy to at least the sensor apparatus, the first electronic backup control unit (HAD-ECU Backup 1) and the second service brake controller (EBS-ECU2), and **in that**
c) a third energy supply (26) is provided which is independent of the first electrical energy supply (22) and of the second electrical energy supply (24) and which supplies electrical energy to at least the second electronic backup control unit (HAD-ECU Backup 2).

11. System according to any of the preceding claims, **characterised in that** at least the electronic main control unit (HAD-ECU Main) and/or the first electronic backup control unit (HAD-ECU Backup 1) (is) are configured such that at least a position and/or a speed and/or a nature of at least one object located in the environment of the motor vehicle is detected on the basis of the environment data, and, as a reaction to the detection of the position and/or the speed and/or the nature of the at least one object, a movement corridor is determined for the further movement of the motor vehicle, wherein the control commands are then generated depending on the movement corridor determined.

12. System according to any of the preceding claims, **characterised in that** the error or failure in the electronic main control unit (HAD-ECU Main) and/or in the first electronic backup control unit (HAD- ECU Backup 1) is detected by means of
a) respective self-monitoring and/or by means of
b) external monitoring of the electronic main control unit (HAD-ECU Main) by the first electronic backup control unit (HAD-ECU Backup 1), or by means of external monitoring of the first electronic backup control unit (HAD-ECU Backup 1) by the second electronic backup control unit (HAD-ECU Backup 2).

13. Vehicle, in particular commercial vehicle having a system (100) according to at least one of the preceding claims.

## Revendications

1. Système (100), par lequel un fonctionnement au moins partiellement autonome d'un véhicule automobile est commandé, contenant au moins
a) un dispositif capteur (2), avec lequel des données environnementales caractérisant l'environnement du véhicule automobile peuvent être générées,
b) une unité de commande principale (HAD-ECU Main) électronique qui reçoit les données environnementales du dispositif capteur (2) et commande en fonction des données environnementales, des ordres de réglage dans au moins un appareil ou dans au moins un actionneur qui est utilisé pour le fonctionnement au moins partiellement autonome du véhicule automobile,
c) une première unité de commande de remplacement (HAD-ECU Backup 1) électronique qui reçoit dans le cas d'une erreur ou panne de l'unité de commande principale (HAD-ECU Main) électronique les données environnementales du dispositif capteur (2) et en fonction des données environnementales commande des ordres de réglage dans l'au moins un appareil ou dans l'au moins un actionneur qui est utilisé pour le fonctionnement au moins partiellement autonome du véhicule automobile,
d) une seconde unité de commande de remplacement (HAD-ECU Backup 2) électronique qui reçoit dans le cas d'une erreur ou panne de l'unité de commande principale (HAD-ECU Main) électronique et de la première unité de commande de remplacement (HAD-ECU Backup 1) électronique les données environnementales du dispositif capteur (2) et en fonction des données environnementales commande des ordres de réglage dans l'au moins un appareil ou dans l'au moins un actionneur qui est utilisé pour le fonctionnement au moins partiellement autonome du véhicule automobile,
e) un appareil de direction électrique avec un actionneur de direction électrique,
f) un appareil de frein de fonctionnement (EBS) électronique avec au moins un appareil de commande de frein de fonctionnement (EBS-ECU1, EBS-ECU2) électronique et avec au moins un actionneur de frein de fonctionnement,
g) un appareil de frein de stationnement (EPB) électrique avec un appareil de commande de frein de stationnement (EPB-ECU) électronique et avec au moins un actionneur de frein de stationnement,
h) un appareil de commande de moteur électronique qui commande un moteur du véhicule automobile, dans lequel
i) l'unité de commande principale (HAD-ECU Main) électronique commande en fonction des données environnementales des ordres de réglage dans l'appareil de frein de fonctionnement (EBS) électronique et/ou l'appareil de frein de stationnement (EPB) électrique et/ou l'appareil de direction électrique et/ou dans l'appareil de commande de moteur, et dans lequel
j) la première unité de commande de remplacement (HAD-ECU Backup 1) électronique commande en fonction des données environnementales des ordres de réglage dans l'appareil de frein de fonctionnement (EBS) électronique et/ou l'appareil de frein de stationnement (EPB) électrique et/ou l'appareil de direction électrique et/ou dans l'appareil de commande de moteur électronique, et dans lequel
k) la seconde unité de commande de remplacement (HAD-ECU Backup 2) électronique commande en fonction des données environnementales des ordres de réglage au moins dans l'appareil de frein de fonctionnement (EBS) électronique et/ou l'appareil de frein de stationnement (EPB) électrique et/ou l'appareil de direction électrique
et/ou dans l'appareil de commande de moteur électronique, et dans lequel
l) la seconde unité de commande de remplacement (HAD-ECU Backup 2) électronique comporte l'appareil de commande de frein de stationnement (EPB-ECU) électronique ou est formée par celui-ci, dans lequel l'appareil de commande de frein de stationnement (EPB-ECU) électronique reçoit dans le cas d'une erreur ou panne de l'unité de commande, principale (HAD-ECU Main) électronique et de la première unité de commande de remplacement (HAD-ECU Backup 1) électronique les données environnementales du dispositif capteur (2) et en fonction des données environnementales actionne au moins les actionneurs de frein de stationnement de l'appareil de frein de stationnement (EPB) électrique.

2. Système selon la revendication 1, **caractérisé en ce que** l'appareil de commande de frein de stationnement (EPB-ECU) électronique est réalisé afin qu'il actionne les actionneurs de frein de stationnement en réaction aux ordres de réglage indépendamment du fait que le véhicule automobile se trouve dans un état de roulement ou à l'arrêt.

3. Système selon l'une quelconque des revendications précédentes, **caractérisé en ce que** l'appareil de commande de frein de stationnement (EPB-ECU) électronique communique directement avec le dispositif capteur (2) au moyen de câbles de signal posés du dispositif capteur à l'appareil de commande de frein de stationnement électronique.

4. Système selon l'une quelconque des revendications précédentes, **caractérisé en ce que** l'appareil de direction électrique contient un appareil de commande de direction électronique, dans lequel les ordres de réglage sont commandés et qui met en oeuvre les ordres de réglage dans l'actionneur de direction électrique.

5. Système selon l'une quelconque des revendications précédentes, **caractérisé en ce que** l'au moins un appareil de commande de frein de fonctionnement (EBS-ECU1, EBS-ECU2) électronique de l'appareil de frein de fonctionnement (EBS) électronique reçoit les ordres de réglage de l'unité de commande principale (HAD-ECU Main) électronique ou de la première unité de commande de remplacement (HAD-ECU Backup 1) électronique et est pourvu de routines de commande ou de régulation, par lesquelles en fonction des ordres de réglage, l'au moins un actionneur de frein de fonctionnement et/ou l'appareil de frein de stationnement (EPB) électrique et/ou l'appareil de direction électrique et/ou l'appareil de commande de moteur électronique est (sont) commandable(s) ou régulable (s).

6. Système selon l'une quelconque des revendications précédentes, **caractérisé en ce que** dans l'au moins un appareil de commande de frein de fonctionnement (EBS-ECU1, EBS-ECU2) électronique de l'appareil de frein de fonctionnement (EBS) électronique, des routines au moins d'un système de régulation de dynamique de roulement (ESP, ABS, ASR) sont intégrées, dans lequel les ordres de réglage commandés dans l'au moins un appareil de commande de frein de fonctionnement (EBS-ECU1, EBS-ECU2) électronique y sont adaptés en fonction des routines d'au moins un système de régulation de dynamique de roulement (ESP, ABS, ASR).

7. Système selon l'une quelconque des revendications précédentes, **caractérisé en ce qu'au** moins un premier appareil de commande de frein de fonctionnement (EBS-ECU1) et un second appareil de commande de frein de fonctionnement (EBS-ECU2) sont prévus dans l'appareil de frein de fonctionnement électronique, dans lequel le premier appareil de commande de frein de fonctionnement (EBS-ECU1) et le second appareil de commande de frein de fonctionnement (EBS-ECU2) sont des appareils de commande séparés et le premier appareil de commande de frein de fonctionnement (EBS-ECU1) reçoit des ordres de réglage de l'unité de commande principale (HAD-ECU Main) électronique et le second appareil de commande de frein de fonctionnement (EBS-ECU2) reçoit des ordres de réglage de la première unité de commande de remplacement (HAD-ECU Backup 1) électronique.

8. Système selon la revendication 7, **caractérisé en ce que** le premier appareil de commande de frein de fonctionnement (EBS-ECU1) et le second appareil de commande de frein de fonctionnement (EBS-ECU2) commandent des actionneurs de frein de fonctionnement de l'appareil de frein de fonctionnement électronique par roue ou par essieu.

9. Système selon l'une quelconque des revendications précédentes, **caractérisé en ce que** l'appareil de frein de fonctionnement (EBS) électronique est formé par un appareil de frein de fonctionnement électro-pneumatique avec des modules de régulation de pression électro-pneumatiques et avec des actionneurs de frein de fonctionnement pneumatiques, pour lequel la pression de freinage pneumatique est régulée.

10. Système selon l'une quelconque des revendications 7 ou 8, **caractérisé en ce que**
a) une première alimentation en énergie (22) électrique est prévue, laquelle alimente au moins le dispositif capteur (2), l'unité de commande principale (HAD-ECU Main) électronique et le premier appareil de commande de frein de stationnement (EBS-ECU 1) en énergie électrique, et que
b) une deuxième alimentation en énergie (24) indépendante de la première alimentation en énergie électrique (22) est prévue, laquelle alimente au moins le dispositif capteur, la première unité de commande de remplacement (HAD-ECU Backup 1) électronique et le second appareil de commande de frein de fonctionnement (EBS-ECU 2) en énergie électrique, et que
c) une troisième alimentation en énergie (26) indépendante de la première alimentation en énergie électrique (22) et de la deuxième alimentation en énergie électrique (24) est prévue, laquelle alimente au moins la seconde unité de commande de remplacement (HAD-ECU Backup 2) électronique en énergie électrique.

11. Système selon l'une quelconque des revendications précédentes, **caractérisé en ce qu'au** moins l'unité de commande principale (HAD-ECU Main) électronique et/ou la première unité de commande de remplacement (HAD-ECU Back 1) électronique est/sont réalisée(s), que sur la base des données environnementales, au moins une position et/ou une vitesse et/ou un type au moins d'un objet se trouvant dans un environnement du véhicule automobile est détecté(e) et en réaction à la détection de la position et/ou de la vitesse et/ou du type d'au moins un objet, un corridor de déplacement est calculé pour la suite du déplacement du véhicule automobile, dans lequel les ordres de réglage sont générés en fonction du corridor de déplacement calculé.

12. Système selon l'une quelconque des revendications précédentes, **caractérisé en ce que** l'erreur ou la panne de l'unité de commande principale (HAD-ECU Main) électronique et/ou de la première unité de commande de remplacement (HAD-ECU Backup 1) électronique est détectée au moyen
a) d'une auto-surveillance respective, et/ou au moyen
b) d'une surveillance externe de l'unité de commande principale (HAD-ECU Main) électronique par la première unité de commande de remplacement (HAD-ECU Backup 1) électronique, ou au moyen d'une surveillance externe de la première unité de commande de remplacement (HAD- ECU Backup 1) électronique par la seconde unité de commande de remplacement (HAD-ECU Backup 2) électronique.

13. Véhicule, en particulier véhicule utilitaire avec un système (100) selon au moins l'une quelconque des revendications précédentes.
